# EUROPEAN PATENT SPECIFICATION

(11) **EP 1 639 284 B1**
(45) Date of publication and mention of the grant of the patent: **15.05.2019**
(21) Application number: 03741084.2
(22) Date of filing: 01.07.2003
(51) Int. Cl.: F16K 31/56

(54) **GAS COCK**
GASHAHN
ROBINET DE GAZ

(43) Date of publication of application: 29.03.2006
(73) Proprietor: SABAF S.p.A., 25035 Ospitaletto (BS) (IT)
(72) Inventor: BETTINZOLI, Angelo, 25062 Concesio-(BS) (IT)
(74) Representative: Marietti, Andrea
(86) International application number: PCT/IT2003/000410
(87) International publication number: WO 2005/003610

(56) References cited:
- WO-A-02/48590
- GB-A- 1 357 424
- US-A- 2 861 591
- US-A- 4 773 439
- US-A- 4 986 308
- US-A- 5 713 387
- US-B1- 6 336 469

## Description

### Field of the Invention

The present invention relates to a device preventing the attainment of one stable position for the rotatable plug (key) of a gas cock in correspondence of at least one predefined angular interval, and a multi-way cock endowed with such a device. Such a cock according to the present invention could find particular employment in gas-fired cooking or heating devices.

### PRIOR ART

In particular, in order to supply gas to cooking or heating devices endowed with two or more separate burners or having burners with at least two separately fed flame-crowns, it is current practice to use a single multi-way cock (i.e. equipped with multiple gas-flow conduits) operated by a single handle to regulate the flow of gas to the various burners or flame crowns.

In some applications which are becoming ever more widespread, the handle operating the cock commands the sequential operation of the burners, or flame crowns, in a separated or combined way, such that only one of the burners (flame crowns) is active at any given moment or, alternatively, a plurality of burners (flame crowns) are active at the same time.

In greater detail, such multi-way cocks usually comprise a body endowed with inlet and outlet sections respectively for at least one gas inlet conduit and two or more outlet conduits, as well as a shaped plug (or key) that, fitted rotatable within the body, enables regulation of the passage of the gas from the inlet conduit to the outlet conduits.

Multi-way cocks comprising a body within which a shaped plug (or key) is rotatable in order to progressively connect two or more outlet conduits with a gas inlet conduit are known to the art and as an example are described in the United States patent US 0.627.019 (STREUBEL) or in the French patent FR 1.390.722 (UNIOM).

The French patent application FR 2.503.316 (SOURDILLON) also generically claims a multi-way cock in which a shaped plug progressively puts two inlet (or outlet) gas conduits into communication with an outlet (or inlet) gas conduit.

In the case in which it is desired to obtain the simultaneous operation of two or more burners (or flame crowns) in correspondence to a certain angular position of the plug, the latter must moreover present cutaways or channels that, depending on the angle of rotation of the same plug, are progressively engaged with the aforesaid inlet sections of the outlet conduits.

In particular, to supply burners comprising at least two separately fed flame crowns, usually concentric, two-way cocks are known to have been produced in which the plug, when it is turned within a first angular interval, allows the gradual passage of gas to a first conduit directed to a flame crown, and, only subsequently, as a result of a further rotation, the plug allows the simultaneous passage of gas to both outlet conduits, in such way that both the flame crowns are fed.

The rotation by the operator of the drive shaft of the plug within the above-mentioned two-way cock causes therefore, with increasing angle of rotation of the same drive shaft, gas to be supplied (usually progressively) initially to only one flame crown, and thereafter (also progressive where necessary) simultaneously to the two flame crowns of the burner.

Multi-way cocks for the supply of gas to separated burners, or flame crowns, can commonly be used also in the domestic setting, in cooking equipment.

Such cocks - in particular those that allow the progressive operation of two separate flame crowns - are particularly effective in cases where sensitive modulation of the heat distributed from a multi flame-crown burner is required, and so are useful in cooking equipment, where extremely precise control of heat emission for cooking is demanded.

However, because of the variable conditions of pressure and temperature to which gas supply is normally subject, and because of the different cross-sections of outlet conduits and unavoidable imprecision in producing cocks, it has been found that, in the case of the multi-way cocks mentioned above, distribution of the gas to one or more of the outlet conduits was insufficient, or at least irregular, in positions corresponding to one or more angular intervals within which the drive shaft - and therefore the plug of the cock - is rotated.

In particular, in the specific case of two-way cocks used in cooking equipment for burners having at least two separated flame crowns, in which simultaneous supply of gas to the said flame crowns is obtained, the Applicant has verified that, corresponding to the angle of rotation of the plug in which such simultaneous supply of gas to two outlets occurs - and to a certain surrounding thereof - supply of the gas to the two separate flame crowns turns out to be insufficient.

Similar gas distribution anomalies can also be found, though very rarely, in single-way outlet cocks corresponding to certain intermediate angular positions taken up by the plug.

WO-A-02/48590 (ECO ELECTRONICS LTD) discloses a fluid control valve according to the preamble of claim 1, wherein means are provided for preventing the stable positioning of the valve plug within an angular interval extending from an initial position of the plug, in which the valve is closed, and a final position, in which the valve is open.

It is therefore the aim of the present invention to supply a gas supply cock with one or more outlets that does not present the disadvantages of the present art and that therefore provides regular distribution of the gas during use.

Another aim of the present invention is to produce a device that is applicable where necessary to existing cocks not originally designed to use such a device, that eliminates or reduces the problems of the present art and that consequently allows effective operation of the cock under any condition of use.

Moreover, although the present invention is mainly intended for multi-way gas cocks, another scope of the present invention is to produce a single-way one-outlet cock in which the travel of rotation of the cock plug can be regulated, in order to prevent the plug taking up some angular positions, where the same cock could malfunction.

### SUMMARY OF THE INVENTION

These and other aims are achieved by the following gas supply cock according to independent Claim 1 and by the method for the regulation of the travel of the cock plug according to the independent Claim 13. Advantageous features of the invention are defined in the dependent claims.

The gas supply cock according to the present invention as defined by independent Claim 1 comprises a cock body in which there is at least one gas inlet conduit and at least one gas outlet conduit, and in which a plug is lodged for the purpose of regulating, as a function of its angular position, the flow of gas coming from the inlet conduit to the outlet conduit, the plug being rotatable between an initial position closing the cock, and a final position opening the cock. The cock also comprises means for preventing the stable positioning of the rotatable plug corresponding to at least one predefined angular interval that is substantially distant from the aforesaid initial and final positions of the plug.

Therefore, in the case in which a cock presents small anomalies of operation in correspondence of one or more angular intervals assumed by the plug within the body of cock, the present invention teaches to prevent the positioning of the cock in such angular intervals with the aim of guaranteeing regular supply to the burner, without having to modify the internal geometry of the body of burner, the plug and/or the intakes of the inlet and outlet conduits and therefore without having to undertake difficult detailed analysis of the fluid flows within the cock.

In particular, considering a multi-way cock i.e. with multiple outlet conduits, in the case in which the latter present interruptions of the gas supply, above all in correspondence of that angular interval in which the supply is switched from supplying the first outlet conduit to supplying the second outlets, the present invention provides for preventing that such angular interval can be reached.

According to a preferred aspect of the present invention, the means of preventing the stable positioning of the plug comprises an elastic means acting, directly or indirectly (by means of the drive shaft of the plug) on the plug, in correspondence or in proximity to one or more angular positions that the plug could assume.

In particular, such means of preventing the stable positioning of the plug could comprise a striker element on which the aforesaid elastic means act in correspondence of one or more angular positions, the elastic means being constrained to the body of the cock and the striker element being rotatably integral to the plug, or vice-versa.

According to another aspect of the present invention as defined by independent Claim 13, a method is supplied for regulating the travel of rotation of the plug of a cock rotatable between one initial position and one final position, comprising the phase of preventing the stable positioning of the rotatable plug in correspondence of at least one predefined angular interval, such angular interval being distant from the aforesaid initial and final positions.

### BRIEF DESCRIPTION OF THE DRAWINGS

Some forms of preferential embodiment of the present invention will now be described, by way of a non-limiting example, with reference to the enclosed figures, in which:
figure 1 is a perspective view of a particular embodiment of the cock according to the present invention;
figure 2 is a view from the bottom of the cock of figure 1;
figure 3 is a front view of the cock in figure 1, in which a device is visible for preventing the stable positioning of the rotatable plug of the cock in correspondence of at least one predefined angular interval, according to a particular aspect of the present invention;
figure 4 is a perspective view of another embodiment of the cock according to the present invention;
figure 5 is a front view of the cock of figure 4;
figure 6 is a front view of a further embodiment of the cock of the present invention;
figure 7 is a perspective view of a another embodiment of the cock according to the present invention;
figure 8 is a front view of the cock of figure 7,
figure 9 is a view from above of the cock of figure 7;
figure 10 is a front view of a cock according to another aspect of the present invention; and
figure 11 is a perspective view of a further embodiment of the cock according to the present invention.

### DETAILED DESCRIPTION OF SOME PREFERRED EMBODIMENTS OF THE INVENTION

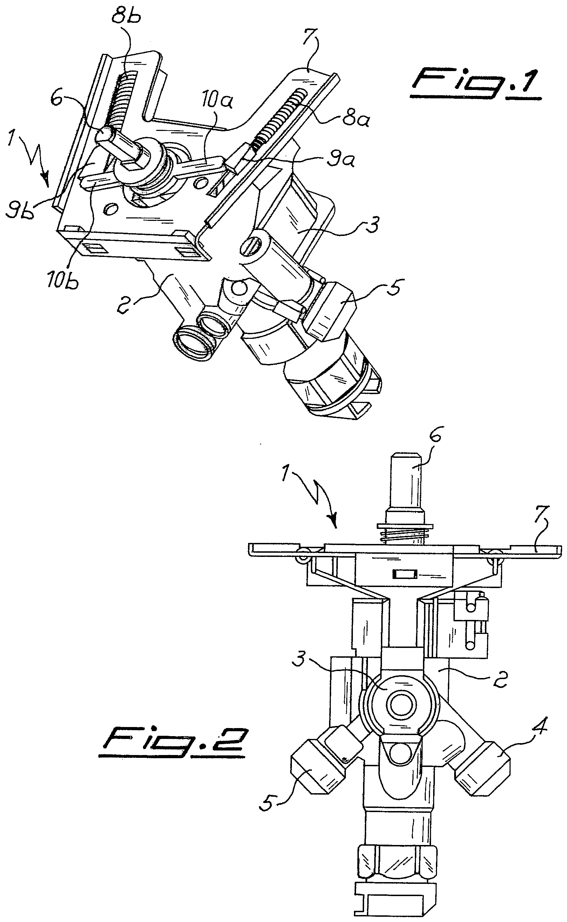

With reference to figures 1, 2 and 3, cock 1 for gas according to the present invention, comprises a cock body 2 within which is lodged a plug, or key, shaped in order to place in fluid connection an inlet conduit 3, connected to the general gas pipe network, with at least one outlet conduit 4 or 5 directed, for example, to a domestic burner.

The plug of burner 1 (not illustrated), according to the present art, is of a type rotatable between an initial position in which the same plug prevents the gas from the inlet conduit 3 reaching the outlet conduit or conduits 4, 5, and a final position in which the gas reaches, at full flow rate, at least one outlet conduit 4 or 5. The rotation of the plug within body 2 of cock 1 allows to regulate the flow of the gas directed to the outlet conduits 4, 5, giving various gas flow rates and/or various outlet destinations of the gas, depending on the angular position assumed by the same plug with respect to the body 2 of cock 1.

In particular, in the case of multi-way cock 1 having outlets 4, 5, the plug regulates, depending on the angular position assumed, the flow of gas coming from inlet conduit 3 and directed to two or more outlet conduits 4, 5, either separately or combined.

In the embodiment illustrated, as known to the art, the plug is commanded by shaft 6 to which it is coaxially integral and which, projecting from body 2 of cock 1, is set to be operated by a user by means, for example, of a handle (not shown).

According to the present invention, cock 1 also comprises means 7, 8a, 8b, 9a, 9b, 10a, 10b, to prevent the stable positioning of the plug in correspondence of at least one predefined angular interval, distant from and comprised between the aforesaid initial and final positions which can be assumed by the plug and, therefore, also by the integrally fixed shaft 6.

In greater detail, in the cock shown in figures 1 to 3, such means of preventing the stable positioning of the plug in correspondence of at least one predefined angular interval comprise elastic means 8a, 9a and 8b, 9b that, fixed integrally to body 2 of cock 1 by means of a flange 7, act on a striker element 10a, 10b, which is integral to the shaft 6 of the plug of the cock.

In the particular embodiment shown, the elastic means are constituted by two contrast elements 9a, 9b moving within guides 11 and rendered elastic by two cylindrical helical springs 8a, 8b, each of which is retained respectively by a lug 12 integral to the flange 7 within guide 11 and by a shoulder 13 on the corresponding contrast element (or cursor) 9a or 9b.

The cursors 9a, 9b, which are maintained slidable, by guides 11 of flange 7, along directions falling along a plane substantially perpendicular to the axis of shaft 6, are shaped to engage the strikers 10a, 10b, which are integral to the same shaft 6, in correspondence of a predetermined angular interval into which the strikers 10a, 10b and therefore the shaft 6 could be moved by the user.

The directions of translation of the cursors 9a, 9b, inclined therebetween at a predefined angle due to guides 11, and the shape of the strikers 10a, 10b, moreover moving in the same plane as the cursors 9a, 9b, or on a plane parallel to this, define an angular interval of engagement of the extremities of the striker elements 10a, 10b with the cursors 9a, 9b, within which interval the springs 8a, 8b bias the striker elements 10a, 10b, and therefore the shaft 6, to assume a precise angular position that is outside the aforesaid interval, independently of the sense of rotation of shaft 6.

In other words, the cursors 9a, 9b intersect the trajectory followed by the striker elements 10a, 10b only in correspondence of a precise angular interval of the latter trajectory, and act on such elements 10a, 10b due to the elasticity given by the springs 8a, 8b, driving them outside such an angular interval.

In this way, according to the method of the present invention, within the angular interval defined by the inclination of guides 11 and by the shape of the cursors 9a, 9b and of the striker elements 10a, 10b no stable angular position can be attained by the shaft 6, since the latter is biased by the springs 8a, 8b, to angular positions immediately above or below such angular interval.

The flange 7 with guides 11, the cursors 9a, 9b with their respective springs 8a, 8b and the striker elements 10a, 10b can be subsequently fitted to cock 1, and constitute a device to prevent a stable position of the gas cock plug being maintained in correspondence of at least one predefined angular interval, according to a particular aspect of the present invention.

In the cock indicated in figures 1-3, in which two outlet conduits 4, 5 supply gas to two burners or a burner with multi flame crowns, the interdiction angular interval favorably corresponds to the arc of trajectory, followed by the cock plug 1 in its rotation, in which gas supply passes from supplying the first outlet conduit 4 to supplying the second outlet 5, either separately or simultaneously with the aforesaid first outlet conduit 4.

With cock 1 described above, when the user operates the drive shaft 6 by starting from the initial closed position of cock 1 and turns the plug in the only sense of rotation for opening the cock which is allowed by an end stop (not shown) of cock 1, at first this causes supply of the gas to the first outlet conduit 4 to increase gradually and then, continuing the rotation, takes up the angular position that immediately precedes the point in which supply of the gas to the second outlet 5 begins. In this position, which immediately precedes the point in which the Applicant has found to be relevant gas supply anomalies, the geometry of the interdiction device 7, 8a, 8b, 9a, 9b, 11, 10a, 10b is such that at least one striker element 10a engages one of the elastic cursors 9a, driving it backwards to remain in such position.

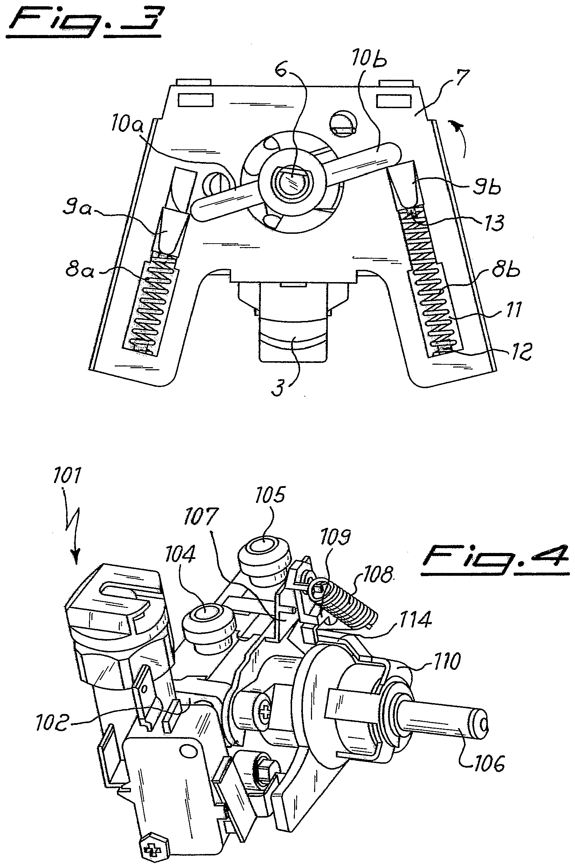

Continued rotation of shaft 6 towards the final position of rotation causes, due to the interaction of the striker element 10a with the cursor 9a for a predefined section of the trajectory of the element 10a, the movement of the same cursor 9a along guide 11, overcoming the resistance offered by the spring 8a. If the rotation of the shaft 6 is interrupted when the trajectories of the cursor 9a and the striker element 10a still intersect, and therefore the cursor 9a and the striker element 10a are still in contact (as is shown in figure 3), the element 10a is forced by the spring 8a and the cursor 9a into the initial position, immediately before the point in which supply anomalies of cock 1 are encountered.

The length of the section of intersection of the trajectories of the cursor 9a and element 10a thus determines the interdiction angle interval size for shaft 6, and therefore for the plug of, cock 1. If, on the other hand, rotation of shaft 6 exceeds the section of intersection of the respective trajectories of the element 10a and of the cursor 9a, at whichever point such rotation is interrupted, obviously before or in correspondence to the end stop for the same shaft 6, the striker elements 10a, 10b are not in engagement with the cursors 9a, 9b and therefore shaft 6 is situated in a stable position.

In the case of rotation in the opposite sense, from the final position to the initial position of the plug of cock 1, in correspondence to the interdiction angular interval, the geometry of device 7, 8a, 8b, 9a, 9b, 11, 10a, 10b, induces the other striker element 10b to engage with the cursor 9b, which acts in a similar way to what was described above in relation to the striker element 10a and to the cursor 9a.

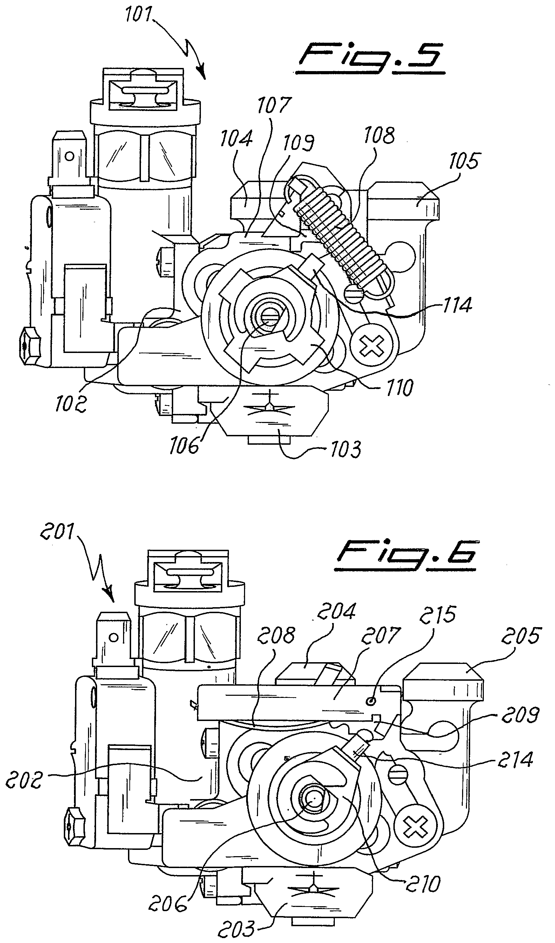

Figures 4 and 5 show another embodiment of a gas supply cock 101 according to the present invention. Cock 101, similar to cock 1 of figures 1-3, comprises a body 102 within which is lodged a plug, integral to a shaft 106, serving to regulate, as a function of its angular position, gas flowing from an inlet conduit 103 and directed to two gas outlet conduits 104, 105.

Cock 101 also comprises means for preventing the stable positioning of the plug over a predefined angular interval; such means comprise a striker element 110, equipped with a tooth 114, rotatably integral to a drive shaft 106, a support 107 integral to a body 102 of cock 101, and a contrast element 109, rendered elastic by a cylindrical helical spring 108, and mounted in a mobile way, and in particular in an oscillating way, on support 107.

During the travel of rotation of the shaft 106, the trajectory followed by tooth 114 intersects for a limited section the trajectory that the contrast element 109 follows as it overcomes the resistance of spring 108. The section in which tooth 114 intersects the trajectory of the contrast element 109 defines the angular interval preventing the attainment of a stable position of shaft 106 and therefore of the plug of cock 101.

The shape of the contrast element 109 and the disposition of spring 108 are such that, independently of the sense of rotation of the shaft 106, when tooth 114 is engaged in the section of intersection of the respective trajectories with oscillating element 109 and the torque exerted by the user on the shaft 106 passes out, the spring 108 acts to return tooth 114, and therefore shaft 106, into the position immediately preceding the point of initial intersection of the trajectories of the tooth 114 and element 109.

In figure 6, another device is reported to prevent a rotatable plug of a gas cock 201 taking up a stable position in correspondence of at least one predefined angular interval, according to another aspect of the present invention.

On cock 201, having a gas inlet conduit 203 and two gas outlet conduits 204, 205, cut in a body 202, and a plug operated by shaft 206 to regulate gas flow, is mounted an interdiction device comprising a striker element 210 fastened onto the shaft 206 and having a tooth 214, as well as a contrast element 209 hinged in 215 on a bracket 207 integral to the body 202 of cock 201.

The contrast element 209 is rendered elastic by means of a flat spring 208 and is shaped to engage with tooth 214 in correspondence of a section in which there is intersection of the trajectory followed by tooth 114 and the trajectory of element 209.

Similar to the embodiment of figures 4 and 5, such section of intersection of the respective trajectories of tooth 214, followed by the latter during the rotation of the shaft 206, and the rotatable contrast element 209, followed by contrast element 209 overcoming the resistance of spring 208, determines an angular interval in which the possibility of maintaining a stable position of the shaft 206 is precluded in the absence of an external operating torque.

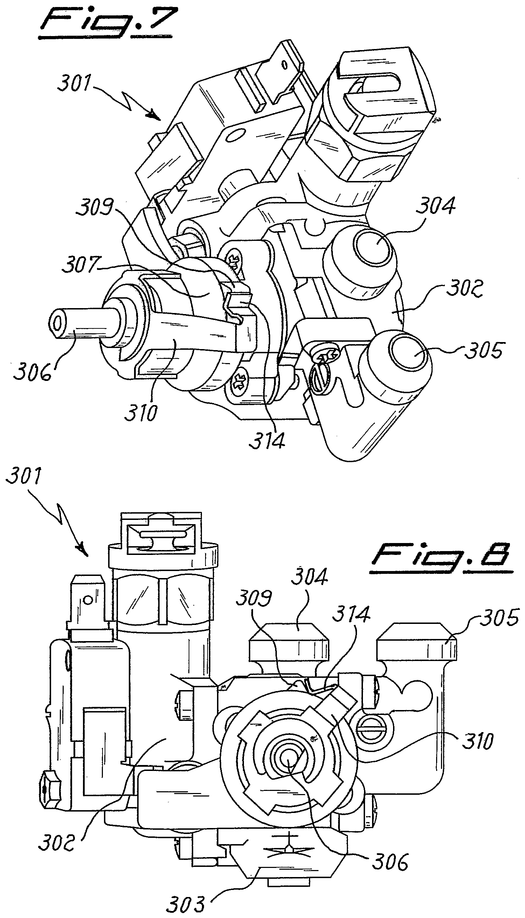

Figures 7, 8 and 9 show a further form of embodiment of a cock 301 according to the present invention, in which an elastically deformable contrast element 310, 314, is integral to the drive shaft 306 of the plug of cock 301, and a rigid striker element 309, with a relative bracket 307, is instead integral to the body 302 of cock 301.

In particular, the contrast element 310 comprises, a "V-shaped" tooth 314 made from an elastically deformable material, in a radial position with respect to the shaft 306; the striker element 309, integral to body 302 of cock 301, is substantially triangular-shaped and is located in such a way as to intersect the trajectory followed, during its rotation, by the elastic tooth 314.

The triangular striker element 309 therefore constitutes an obstacle, extended for the entire length of its base, that is opposed to the rotation of tooth 314. Only a determined torque imposed by the user on the shaft 306 forces the "V-shaped" tooth 314 into engagement with the element 309, imposing an elastic deformation on the same tooth 314 and allowing the shaft 306 to continue rotating beyond element 309. The coupling of the inclined surfaces of tooth 314 and element 309 and the elasticity of the same tooth 314 prevent the inferior apex of tooth 314 finding a stable position along an inclined side of the triangular striker element 309.

The size of striker element 309 defines a tract of the trajectory of the elastic tooth 314 in which the latter cannot find a stable position, thus determining the extent of the interdiction angular interval of the shaft 306, and therefore of the cock plug 301.

According to a preferential aspect of the present invention, bracket 307 (to which triangular striker 309 is constrained integrally) can be produced in a material having a certain degree of elasticity and can assume such shape as to be fixed to the body 302 of the cock only due to its own elastic deformability.

Alternatively, bracket 307 can be constrained to an elastic means of fixture to body 302 of the cock (not shown), such as - for example - a clip (a ring or an elastic coupling).

In a similar way, the contrast element 310, from which tooth 314 projects, can be constrained integrally to drive shaft 306 of the cock 301 thanks to its own elasticity or thanks to possible elastic means of fixture which can be made integral to the same contrast element 310.

The fixing of bracket 307 and element 310, respectively to cock body 302 and to the drive shaft 306, thanks to their elastic deformability or to elastic means of fixture, simplify the assembly operations of the same cock 301.

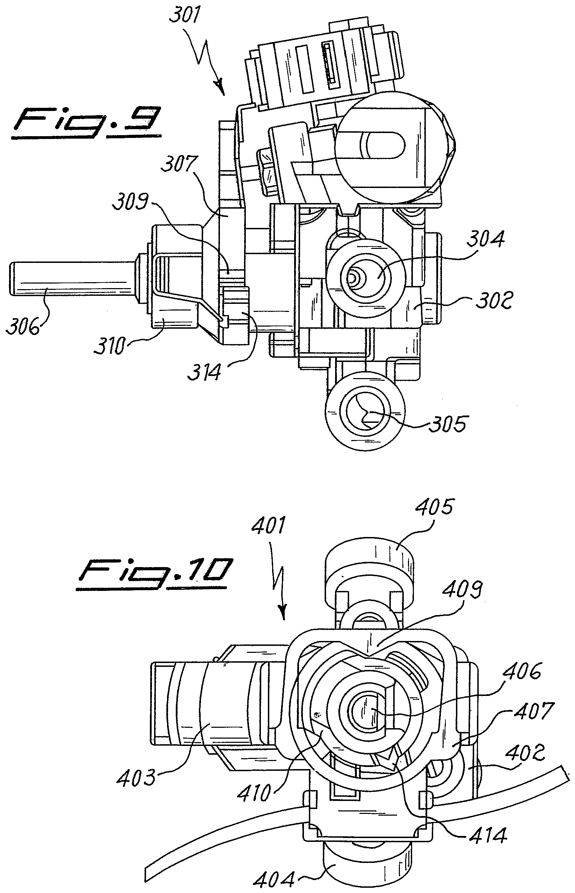

Figure 10 illustrates a further form of embodiment of a cock 401 for gas and a device preventing the maintenance of a stable position of a rotatable plug of a cock 401 corresponding to at least one predefined angular interval, according to a particular aspect of the present invention.

Cock 401 of figure 10, of which it is possible to recognize the drive shaft 406 within body 402, the inlet conduit 403 and outlet conduits 404, 405, comprises an interdiction device comprising a flange 407 integral to body 402 of cock 401 and fitted with a elastically deformable triangular striker element 409, and with a contrast element 410 fastened onto the shaft 406 and having a tooth 414, also triangular, but with apex opposite to the apex of the element 409.

Similar to the device illustrated in figures 7 to 9, the elastic striker element 409 acts as an obstacle, with extent determined by its base, to the rotation of triangular tooth 414 that must, when the shaft 406 is subject to a non-zero torque, deform the element 409 in order to pass beyond the same element. Also in this case, due to the inclined coupling walls of the element 409 and of the tooth 414, and due to the elasticity of such element 409, it is not possible for tooth 414 to find a stable position when its apex is disposed on a side of the striker element 409, and thus, for a certain angular interval, it constitutes interdiction of the stable positioning of shaft 406.

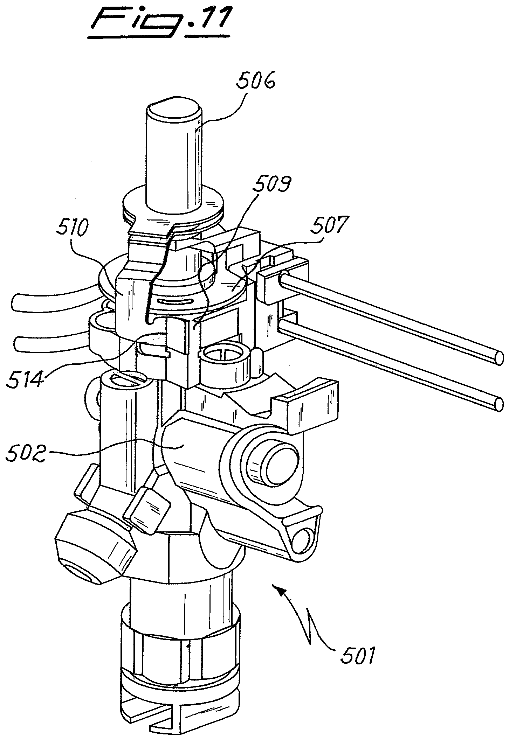

In an alternative solution, illustrated in figure 11, cock 501 presents an interdiction device comprising a flange 507 fixed to body 502 of cock 501 and to which a striker element 509 is integral, together with a contrast element 510 integral to the drive shaft 506 of cock 501 and equipped with an elastic tooth 514.

According to the present invention, tooth 514 is placed to engage with striker element 509, during the rotation of the same shaft 506, in correspondence of a given relative angular position between shaft 506 and striker 509.

Flange 507 is fixed to the body 502 of the cock 501 thanks to its own elastic deformability, i.e. the shape and size of flange 507 as well as the elasticity of the material from which it is produced, allow such flange 507 to be constrained integrally to the body 502 of cock 501, by taking advantage of its property of deforming elastically alone, without needing to employ external means of fixture, such as - for example - an elastic securing ring (seeger).

In a similar way, the contrast element 510 from which projects tooth 514 may be attached in integrally fixed way to drive shaft 506 of the cock 501 due to the own elasticity or due to any necessary elastic means of fixture which are made integral to the same contrast element 510.

## Claims

1. Gas supply cock(1; 101; 201; 301; 401; 501) of the type comprising a body (2;102; 202; 302; 402; 502) of cock (1; 101; 201; 301; 401; 501) in which are provided at least one gas inlet conduit (3; 103; 203; 303) and at least one gas outlet conduit (4, 5; 104,105; 204, 205; 304, 305; 404, 405), and in which a plug is lodged for the purpose of regulating, as a function of its angular position, the flow of the gas coming from said at least one inlet conduit to said at least one outlet conduit, said plug being rotatable between an initial position and a final position, and means (7, 8a, 8b, 9a, 9b, 10a, 10b; 107, 108, 109, 110, 114; 207, 208, 209, 210, 214, 215; 307, 309, 310, 314; 407, 409, 410, 414; 507, 509, 510, 514) for preventing stable positioning of said rotatable plug in correspondence of at least one predefined angular interval, **characterized in that** said at least one predefined angular interval being distant from said initial and final positions, and said plug being stably displaceable in any angular position between said initial and final positions, except that within said at least one predefined angular interval.

2. Cock according to Claim 1, **characterized by** comprising two or more gas outlet conduits (4, 5;104,105 ;204, 205), said plug regulating, as a function of its angular position, the flow of the gas coming from said at least one inlet conduit to said two or more outlet conduits, in a separated or combined way therebetween.

3. Cock according to Claim 2, comprising two outlet conduits and in which said plug at first allows the progressive passage of the gas to a first outlet conduit, then to a second outlet conduit simultaneously to, or separated from, passage to said first outlet conduit, **characterized by** said angular interval having its lower limit placed substantially in correspondence of the angular position of said plug in which the passage of the gas to said second outlet conduit begins.

4. Cock according to Claim 1,2 or 3, in which said means of preventing the stable positioning of said plug comprise elastic means (8a, 8b, 9a, 9b;108, 109; 208,209 ; 310,314 ;410, 414) acting on said plug in correspondence of or in proximity to one or more angular positions of said plug.

5. Cock according to Claim 4, in which said means of preventing the stable positioning of said plug also comprise a striker element(10a, 10b ; 110,114 ;210, 214; 307,309 ; 407,409) on which said elastic means act in correspondence of one or more angular positions of said plug, said elastic means being constrained to the body of the cock and said striker element being integral to said plug, or vice-versa.

6. Cock according to Claim 5, of the type comprising a shaft (6; 106 ; 206; 306; 406) axially rotatable to operate said plug, **characterized in that** said shaft comprises said at least one striker element(10a,10b ; 110,114 ; 210,214 ;307, 309; 407,409), and that said elastic means comprise at least one mobile contrast element (9a, 9b; 109 ; 209; 314; 414) forced elastically into engagement with said striker element in correspondence of one or more angular positions assumed by said shaft.

7. Cock according to Claim 6, in which said at least one striker element of the drive shaft is substantially perpendicular to the axis of rotation of said shaft, and said striker element is mobile along a trajectory that lies in a plane which is perpendicular to the axis of rotation and which contains said at least one striker element.

8. Cock according to any one of the Claims 6 or 7, in which said rotatable shaft comprises two coaxial striker elements (10, 10b) and said elastic means comprise two mobile contrast elements (9a, 9b) forced elastically into engagement with said striker elements respectively, in correspondence of one or more angular positions assumed by said shaft.

9. Cock according to Claim 7 or 8, in which the trajectory followed by said at least one mobile contrast element intersects the trajectory followed by corresponding said at least one striker element, only in a predefined angular interval of the trajectory followed by said striker element.

10. Cock according to Claim 5, in which said striker element comprises a shaped cam (309 ; 409) which is suitable for engaging with an elastic contrast element (314; 414), with which said elastic means are equipped.

11. Cock according to the Claim 1,2 or 3, in which said means of preventing a stable positioning of said plug comprise means to elastically resist to the rotation of the plug, which extend for a predefined angular interval.

12. Cock according to any one of the previous claims, in which said at least one predefined angular interval extends for approximately 30°.

13. Method for regulating the travel of rotation of the plug of a gas supply cock, said plug being rotatable between an initial position and a final position, said plug regulating, as a function of its angular position between said initial and final position, the flow of the gas coming from at least one inlet conduit to at least one outlet conduit of the cock, wherein the stable positioning of said rotatable plug in correspondence of at least one predefined angular interval is prevented, **characterized by** said angular interval being distant from said initial and final positions, said plug being stably displaceable in any angular position between said initial and final positions, except that within said at least one predefined angular interval.

## Patentansprüche

1. Gaszufuhrhahn (1; 101; 201; 301; 401; 501) der Bauart, die einen Körper (2; 102; 202; 302; 402; 502) eines Hahns (1; 101; 201; 301; 401; 501) umfasst, bei dem mindestens eine Gaseinlassleitung (3; 103; 203; 303) und mindestens eine Gasauslassleitung (4, 5; 104, 105; 204, 205; 304, 305; 404, 405) vorgesehen sind, und bei dem ein Verschluss zum Zweck der Regelung der Strömung des Gases in Abhängigkeit von seiner Winkelposition vorgesehen ist, wobei der Gasstrom von der mindestens einen Einlassleitung kommt und zu der mindestens einen Auslassleitung geleitet wird, wobei der Verschluss zwischen einer Ausgangsposition und einer Endposition drehbar ist, und Mittel (7, 8a, 8b, 9a, 9b, 10a, 10b; 107, 108, 109, 110, 114; 207, 208, 209, 210, 214, 215; 307, 309, 310, 314; 407, 409, 410, 414; 507, 509, 510, 514) zum Verhindern einer stabilen Positionierung des drehbaren Verschlusses in Übereinstimmung mit mindestens einem vorbestimmten Winkelintervall, **dadurch gekennzeichnet, dass** das mindestens eine vorbestimmte Winkelintervall von den Anfangs- und Endpositionen entfernt ist, und dass der Verschluss in irgendeiner Winkelposition zwischen der Anfangs- und Endposition stabil verlagert werden kann, außer innerhalb des mindestens einen vorbestimmten Winkelintervalls.

2. Hahn gemäß Anspruch 1, **dadurch gekennzeichnet, dass** er zwei oder mehr Gasauslassleitungen (4, 5; 104, 105; 204, 205) umfasst, wobei der Verschluss in Abhängigkeit von seiner Winkelposition die Strömung des Gases reguliert, das von der mindestens einen Einlassleitung kommt und zu den zwei oder mehr Auslassleitungen geleitet wird, auf eine getrennte oder kombinierte Weise dazwischen.

3. Hahn gemäß Anspruch 2, der zwei Auslassleitungen aufweist und bei dem der Verschluss zuerst den progressiven Durchtritt des Gases zu einer ersten Auslassleitung ermöglicht, dann zu einer zweiten Auslassleitung, gleichzeitig mit dem Durchtritt zur ersten Auslassleitung oder davon getrennt, **dadurch gekennzeichnet, dass** das Winkelintervall mit seiner unteren Begrenzung im Wesentlichen in Übereinstimmung mit der Winkelposition des Verschlusses angeordnet ist, in der der Durchtritt des Gases zu der zweiten Auslassleitung beginnt.

4. Hahn gemäß Anspruch 1, 2 oder 3, bei dem die Mittel zum Verhindern der stabilen Positionierung des Verschlusses elastische Mittel (8a, 8b, 9a, 9b; 108, 109; 208, 209; 310, 314; 410, 414) umfassen, die auf den Verschluss in Übereinstimmung mit oder in der Nähe einer oder mehrerer Winkelpositionen des Verschlusses wirken.

5. Hahn gemäß Anspruch 4, bei dem die Mittel zum Verhindern der stabilen Positionierung des Verschlusses auch ein Schließelement (10a, 10b; 110, 114; 210, 214; 307, 309; 407, 409) umfassen, auf das die elastischen Mittel in Übereinstimmung mit einer oder mehreren Winkelpositionen des Verschlusses wirken, wobei die elastischen Mittel an dem Körper des Hahns befestigt sind und das Schließelement einstückig mit dem Verschluss ist oder umgekehrt.

6. Hahn gemäß Anspruch 5, von der Bauart, die eine Welle (6; 106; 206; 306; 406) umfasst, die axial drehbar ist, um den Verschluss zu betätigen, **dadurch gekennzeichnet, dass** die Welle das mindestens eine Schließelement (10a, 10b; 110, 114; 210, 214; 307, 309; 407, 409) umfasst, und dass die elastischen Mittel mindestens ein bewegliches Gegenelement (9a, 9b; 109; 209; 314; 414) umfassen, das elastisch in Eingriff mit dem Schließelement in Übereinstimmung mit einer oder mehreren Winkelpositionen gezwungen wird, die von der Welle eingenommen werden.

7. Hahn gemäß Anspruch 6, bei dem das mindestens eine Schließelement der Antriebswelle im Wesentlichen senkrecht zur Drehachse der Welle ist und das Schließelement entlang einer Bewegungsbahn beweglich ist, die in einer Ebene liegt, die senkrecht zur Drehachse liegt, und die das mindestens eine Schließelement enthält.

8. Hahn gemäß irgendeinem der Ansprüche 6 oder 7, bei dem die drehbare Welle zwei koaxiale Schließelemente (10, 10b) aufweist und die elastischen Mittel zwei bewegliche Gegenelemente (9a, 9b) umfassen, die jeweils elastisch in Eingriff mit den Schließelementen gehalten werden, entsprechend einer oder mehreren von der Welle eingenommenen Winkelpositionen.

9. Hahn gemäß Anspruch 7 oder 8, bei dem die Bewegungsbahn, der das mindestens eine bewegliche Gegenelement folgt, die Bewegungsbahn, der das entsprechende mindestens eine Schließelement folgt, nur in einem vorbestimmten Winkelintervall der Bewegungsbahn, der das Schließelement folgt, schneidet.

10. Hahn gemäß Anspruch 5, bei dem das Schließelement einen geformten Nocken (309; 409) aufweist, der zum Eingriff mit einem elastischen Gegenelement (314; 414) geeignet ist, mit dem die elastischen Mittel ausgestattet sind.

11. Hahn gemäß Anspruch 1, 2 oder 3, bei dem die Mittel zum Verhindern einer stabilen Positionierung des Verschlusses Mittel umfassen, um der Drehung des Verschlusses elastisch zu widerstehen, die sich über ein vorbestimmtes Winkelintervall erstrecken.

12. Hahn gemäß irgendeinem der vorhergehenden Ansprüche, bei dem sich das mindestens eine vorbestimmte Winkelintervall über ungefähr 30° erstreckt.

13. Verfahren zum Regeln des Drehwegs des Verschlusses eines Gaszufuhrhahns, wobei der Verschluss zwischen einer Ausgangsposition und einer Endposition drehbar ist, wobei der Verschluss in Abhängigkeit von seiner Winkelposition zwischen der Ausgangsposition und der Endposition, die Strömung des Gases, das von der mindestens einen Einlassleitung kommt und zu der mindestens einen Auslassleitung des Hahns geführt wird, regelt, wobei die stabile Positionierung des drehbaren Verschlusses in Übereinstimmung mit mindestens einem vorbestimmten Winkelintervall verhindert wird, **dadurch gekennzeichnet, dass** das Winkelintervall von den Anfangs- und Endpositionen entfernt ist, wobei der Verschluss in irgendeiner Winkelposition zwischen der Anfangs- und Endposition stabil verlagert werden kann, außer innerhalb des mindestens einen vorbestimmten Winkelintervalls.

## Revendications

1. Robinet d'alimentation en gaz (1 ; 101 ; 201 ; 301 ; 401 ; 501) du type comportant un corps (2 ; 102 ; 202 ; 302 ; 402 ; 502) de robinet (1 ; 101 ; 201 ; 301 ; 401 ; 501) dans lequel sont agencés au moins un conduit d'entrée de gaz (3 ; 103 ; 203 ; 303) et au moins un conduit de sortie de gaz (4, 5 ; 104,105 ; 204, 205 ; 304, 305 ; 404, 405), et dans lequel un obturateur est logé dans le but de réguler, en fonction de sa position angulaire, l'écoulement du gaz allant dudit au moins un conduit d'entrée jusqu'audit au moins un conduit de sortie, ledit obturateur pouvant tourner entre une position initiale et une position finale, et des moyens (7, 8a, 8b, 9a, 9b, 10a, 10b; 107, 108, 109, 110, 114; 207, 208, 209, 210, 214, 215 ; 307, 309, 310, 314 ; 407, 409, 410, 414 ; 507, 509, 510, 514) pour empêcher un positionnement stable dudit obturateur rotatif en correspondance d'au moins un intervalle angulaire prédéfini, **caractérisé en ce que** ledit au moins un intervalle angulaire prédéfini est éloigné desdites positions initiale et finale, et ledit obturateur pouvant être déplacé de manière stable dans une quelconque position angulaire entre lesdites positions initiale et finale, sauf dans ledit au moins un intervalle angulaire prédéfini.

2. Robinet selon la revendication 1, **caractérisé en ce qu'**il comprend deux ou plus de deux conduits de sortie de gaz (4, 5 ; 104, 105 ; 204, 205), ledit obturateur régulant, en fonction de sa position angulaire, l'écoulement du gaz allant dudit au moins un conduit d'entrée jusqu'auxdits deux ou plus de deux conduits de sortie, de manière séparée ou combinée entre eux.

3. Robinet selon la revendication 2, comprenant deux conduits de sortie et dans lequel ledit obturateur permet dans un premier temps le passage progressif du gaz vers un premier conduit de sortie, puis vers un second conduit de sortie simultanément au passage vers ledit premier conduit de sortie, ou séparé de celui-ci, **caractérisé en ce que** ledit intervalle angulaire a sa limite inférieure placée sensiblement en correspondance de la position angulaire dudit obturateur dans laquelle commence le passage du gaz vers ledit second conduit de sortie.

4. Robinet selon la revendication 1, 2 ou 3, dans lequel lesdits moyens pour empêcher le positionnement stable dudit obturateur comprennent des moyens élastiques (8a, 8b, 9a, 9b ; 108, 109 ; 208, 209 ; 310, 314 ; 410, 414) agissant sur ledit obturateur en correspondance ou à proximité d'une ou plusieurs positions angulaires dudit obturateur.

5. Robinet selon la revendication 4, dans lequel lesdits moyens pour empêcher le positionnement stable dudit obturateur comprennent également un élément de percussion (10a, 10b ; 110, 114 ; 210, 214 ; 307, 309 ; 407, 409) sur lequel lesdits moyens élastiques agissent en correspondance d'une ou plusieurs positions angulaires dudit obturateur, lesdits moyens élastiques étant limités au corps du robinet et ledit élément de percussion faisant partie intégrante dudit obturateur, ou inversement.

6. Robinet selon la revendication 5, du type comprenant un arbre (6 ; 106 ; 206 ; 306 ; 406) pouvant tourner axialement pour actionner ledit obturateur, **caractérisé en ce que** ledit arbre comprend ledit au moins un élément de percussion (10a, 10b ; 110, 114 ; 210, 214 ; 307, 309 ; 407, 409), et **en ce que** lesdits moyens élastiques comprennent au moins un élément de contraste mobile (9a, 9b ; 109 ; 209 ; 314 ; 414) forcé élastiquement à venir en prise avec ledit élément de percussion en correspondance d'une ou plusieurs positions angulaires adoptées par ledit arbre.

7. Robinet selon la revendication 6, dans lequel ledit au moins un élément de percussion de l'arbre d'entraînement est sensiblement perpendiculaire à l'axe de rotation dudit arbre, et ledit élément de percussion est mobile le long d'une trajectoire qui se trouve dans un plan qui est perpendiculaire à l'axe de rotation et contenant ledit au moins un élément de percussion.

8. Robinet selon l'une quelconque des revendications 6 ou 7, dans lequel ledit arbre rotatif comprend deux éléments de percussion coaxiaux (10, 10b) et lesdits moyens élastiques comprennent deux éléments de contraste mobiles (9a, 9b) forcés de manière élastique pour venir respectivement en prise avec lesdits éléments de percussion, en correspondance d'une ou plusieurs positions angulaires adoptées par ledit arbre.

9. Robinet selon la revendication 7 ou 8, dans lequel la trajectoire suivie par ledit au moins un élément de contraste mobile coupe la trajectoire suivie par ledit au moins un élément de percussion correspondant, uniquement dans un intervalle angulaire prédéfini de la trajectoire suivie par ledit élément de percussion.

10. Robinet selon la revendication 5, dans lequel ledit élément de percussion comprend une came profilée (309 ; 409) qui est adaptée pour venir en prise avec un élément de contraste élastique (314 ; 414), dont sont équipés lesdits moyens élastiques.

11. Robinet selon la revendication 1, 2 ou 3, dans lequel lesdits moyens pour empêcher un positionnement stable dudit obturateur comprennent des moyens pour résister élastiquement à la rotation de l'obturateur, qui s'étendent sur un intervalle angulaire prédéfini.

12. Robinet selon l'une quelconque des revendications précédentes, dans lequel ledit au moins un intervalle angulaire prédéfini s'étend sur environ 30°.

13. Procédé de régulation de la course de rotation de l'obturateur d'un robinet d'alimentation en gaz, ledit obturateur pouvant tourner entre une position initiale et une position finale, ledit obturateur régulant, en fonction de sa position angulaire entre lesdites positions initiale et finale, l'écoulement du gaz allant d'au moins un conduit d'entrée vers au moins un conduit de sortie du robinet, dans lequel
le positionnement stable dudit obturateur rotatif en correspondance d'au moins un intervalle angulaire prédéfini est empêché, **caractérisé en ce que**
ledit intervalle angulaire est éloigné desdites positions initiale et finale, ledit obturateur pouvant être déplacé de manière stable dans une quelconque position angulaire entre lesdites positions initiale et finale, sauf dans ledit au moins un intervalle angulaire prédéfini.
